# EUROPEAN PATENT APPLICATION

(11) **EP 4 564 267 A1**
(43) Date of publication of application: **04.06.2025**
(21) Application number: 23863385.3
(22) Date of filing: 22.08.2023
(51) Int. Cl.: G06Q 20/18, G06Q 20/20, G06Q 20/32, G06V 10/70, G01G 19/414, G01J 5/00, H04N 5/33

(54) **METHOD AND DEVICE FOR PRODUCT CHECKOUT IN UNMANNED STORE**

(30) Priority: 05.09.2022 KR 20220111864
(71) Applicant: Gaeasoft Co., Ltd., Seoul 03142 (KR)
(72) Inventor: KIM, Young Jun, Seoul 02502 (KR)
(74) Representative: BCKIP Part mbB
(86) International application number: PCT/KR2023/012426
(87) International publication number: WO 2024/053909

(57) **Abstract**

Disclosed are a method and device for product checkout in an unmanned store. The method for product checkout in an unmanned store comprises the steps of: recognizing, by means of a product recognition unit, a first product being introduced to a checkout counter; selecting, on the basis of the recognition result for the first product, at least one trained model for identifying the first product; acquiring a first image of the first product by means of a product identification unit; and identifying the first product on the basis of the at least one trained model and the first image.

## Description

### Technical Field

The present invention relates to a method and device for product checkout at an unmanned store.

### Background Art

An explanation as will be given below simply provides only the background art related to an embodiment of the present invention, and through such an explanation, therefore, a conventional technology may not be suggested.

Unmanned automation in the overall logistics process such as production, shipping, transportation, unloading, packing, storing, and checkout of goods has been tried to perform the reduction of labor and the improvement of accuracy in logistics. If the logistics automation is performed, labor cost reduction and safety accident prevention can be achieved, and further, the time required for logistics can decrease to perform systematic management.

If it is desired to check out goods at a store, a store staff scans barcodes for the goods one by one through a barcode scanner and checks out the goods, which causes the time required for goods checkout to increase. As a result, as a customer's waiting time becomes long, store congestion becomes serious and a large number of staffs for checking out goods become needed, which causes a store management cost to become high.

Accordingly, there is a need to develop a technology capable of performing unmanned checkout for a customer's desired goods quickly and accurately.

### Disclosure

### Technical Problem

It is an object of the present invention to provide a method for product checkout at an unmanned store.

It is another object of the present invention to provide a method for product checkout at an unmanned store that is capable of enhancing a degree of accuracy in recognizing a product by means of a plurality of trained models.

### Technical Solution

To accomplish the above objects, there is provided a method for product checkout at an unmanned store, the method including the steps of: recognizing, by means of a product recognition unit, a first product put on a checkout counter; selecting, based on the recognition result for the first product, at least one trained model for identifying the first product; acquiring a first image of the first product by means of a product identification unit; and identifying the first product, based on the at least one trained model and the first image.

The step of recognizing the first product may include the steps of: identifying the size and shape of the first product by means of cameras; measuring the weight of the first product by means of a weight sensor; and measuring the temperature of the first product by means of a thermographic camera.

The step of identifying the size and shape of the first product may include the steps of: acquiring the sectional images of the first product by means of the cameras; and identifying the size and shape of the first product, based on the sectional images of the first product.

The step of selecting the at least one trained model may include the steps of: calculating a first reference corresponding to the recognition result for the first product; and selecting the at least one trained model from a plurality of trained models, based on the first reference.

The step of identifying the first product may include the steps of: calculating second images corresponding to the recognition result by means of the at least one trained model; comparing the first image with the second images by means of image matching; and identifying the first product as a second product having the highest similarity under the result of the image matching.

The method may further include the steps of: determining, after the step of acquiring the sectional images of the first product, whether the sectional images include identification codes for the first product; and recognizing, if it is determined that the identification codes are included, the identification codes and determining the first product as a third product corresponding to the identification codes, wherein the identification codes may be located on the outer wrapped surface of a product and include identification information for the product.

The method may further include the step of transmitting, after the step of comparing the first image with the second images by means of the image matching, a notification that it is necessary to check the first product to a manager terminal if there is no product having the degree of similarity greater than a predetermined degree of similarity to the first product under the result of the image matching.

The trained model may include trained models for a plurality of references for the products sorted according to the sizes, shapes, weights, and temperatures of products, and if a specific product passes through the product recognition unit, training may include supervised training capable of identifying that the specific product is a right product.

According to an embodiment of the present invention, further, there is provided a device for product checkout at an unmanned store, the device including: a memory in which at least one program is recorded; and a processor for executing the program, the program including commands for executing the steps of: recognizing, by means of a product recognition unit, a first product being put on a checkout counter; selecting, based on the recognition result for the first product, at least one trained model for identifying the first product; acquiring a first image of the first product by means of a product identification unit; and identifying the first product, based on the at least one trained model and the first image.

According to an embodiment of the present invention, further, there is provided a system for product checkout at an unmanned store, the system including: a product recognition unit for identifying the size and shape of a product by means of cameras, measuring the weight of the product by means of a weight sensor, and measuring the temperature of the product by means of a thermographic camera; a product identification unit for acquiring the image of the product; and an unmanned store product checkout device for receiving the recognition result for the product from the product recognition unit, receiving the image of the product from the product identification unit, and identifying the product.

### Advantageous Effects of Invention

According to the present invention, there is provided the method for product checkout at an unmanned store.

According to the present invention, further, there is provided a method for product checkout at an unmanned store that is capable of enhancing a degree of accuracy in recognizing a product by means of a plurality of trained models.

### Brief Description of Drawings

FIG. 1 is a block diagram showing subjects for product checkout at an unmanned store according to an embodiment of the present invention.
FIG. 2 is a flowchart showing a method for product checkout at an unmanned store according to an embodiment of the present invention.
FIG. 3 is a flowchart showing the step of recognizing the first product according to the embodiment of the present invention.
FIG. 4 is a flowchart showing the step of identifying the size and shape of the first product according to the embodiment of the present invention.
FIG. 5 is a flowchart showing the step of selecting the trained model according to the embodiment of the present invention.
FIG. 6 is a flowchart showing the step of identifying the first product according to the embodiment of the present invention.
FIG. 7 is a flowchart showing the steps after the step of acquiring the sectional images of the first product according to the embodiment of the present invention.
FIG. 8 is a flowchart showing the step after the step of comparing the first image with the second images according to the embodiment of the present invention.
FIG. 9 is a block diagram showing a computer system according to an embodiment of the present invention.

### Mode for Invention

Hereinafter, example embodiments will be described with reference to the accompanying drawings. If it is determined that the detailed explanation on the well-known technology related to the present invention makes the scope of the present invention not clear, the explanation will be avoided for the brevity of the description. In addition, the example embodiments may be embodied in different forms and should not be construed as limited to the embodiments set forth herein but may be modified and variously implemented by those skilled in the art. In the drawings, dimensions of elements or relative dimensions of elements may be exaggerated for clarity of illustration.

Terms, such as "the first", "the second", and the like may be used to describe various elements, but the elements should not be restricted by the terms. The terms are used to only distinguish one element from the other element. For example, a first element may be named a second element without departing from the scope of the present invention.

In the description, when it is said that one portion is described as "includes" any component, one element further may include other components unless no specific description is suggested.

Hereinafter, an embodiment of the present invention will be described in detail with reference to the attached drawings.

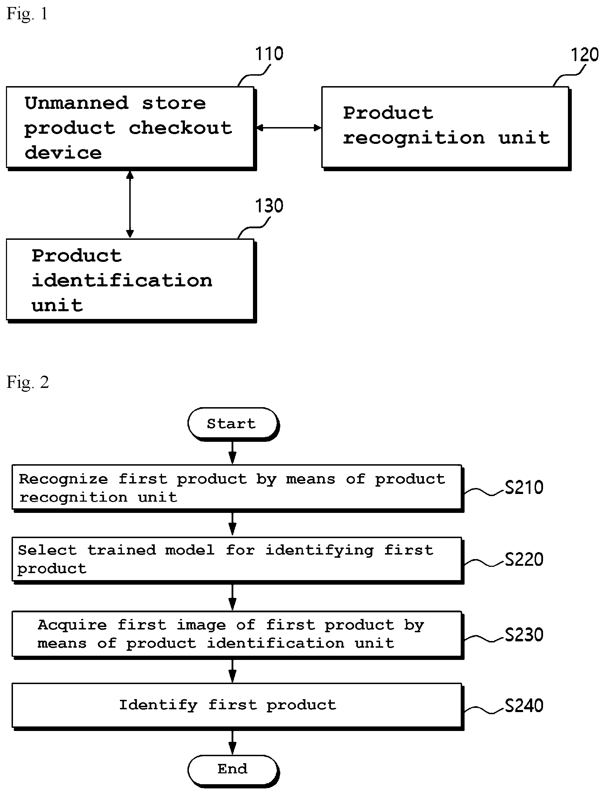

FIG. 1 is a block diagram showing subjects for product checkout at an unmanned store according to an embodiment of the present invention.

Referring to FIG. 1, subjects for product checkout at an unmanned store according to an embodiment of the present invention include an unmanned store product checkout device 110, a product recognition unit 120, and a product identification unit 130.

The unmanned store product checkout device 110 receives a recognition result for a product from the product recognition unit 120 and selects a trained model for identifying the product.

The unmanned store product checkout device 110 receives the acquired image of the product from the product identification unit 130 to identify the product.

The product recognition unit 120 identifies the size and shape of the product by means of cameras, measures the weight of the product by means of a weight sensor, measures the temperature of the product by means of a thermographic camera, and finally provides the recognition result for the product to the unmanned store product checkout device 110.

The product identification unit 130 acquires the image of the product and provides the acquired image to the unmanned store product checkout device 110.

The unmanned store product checkout device 110 and the product recognition unit 120 are connected to each other by means of a communication network, and the unmanned store product checkout device 110 and the product identification unit 130 are connected to each other by means of a communication network.

The communication networks represent connection paths for transmitting and receiving data among the subjects. For example, the communication networks include wired networks such as Local Area Networks (LANs), Wide Area Networks (WANs), Metropolitan Area Networks (MANs), Integrated Service Digital Networks (ISDNs), and the like or wireless networks such as wireless LANs, CDMA, Bluetooth, satellite communication, and the like, but the range of communication networks applied to the present invention may not be limited thereto.

FIG. 2 is a flowchart showing a method for product checkout at an unmanned store according to an embodiment of the present invention.

Referring to FIG. 2, the method for product checkout at an unmanned store according to an embodiment of the present invention first recognizes, by means of a product recognition unit, a first product put on a checkout counter (at step S210).

Next, the method selects, based on the recognition result for the first product, at least one trained model for identifying the first product (at step S220).

In this case, the trained model is a trained model when an initial product is registered and includes a trained model using different trained models according to a plurality of categories.

After that, the method acquires a first image of the first product by means of a product identification unit (at step S230).

Next, the method identifies the first product, based on the at least one trained model and the first image (at step S240).

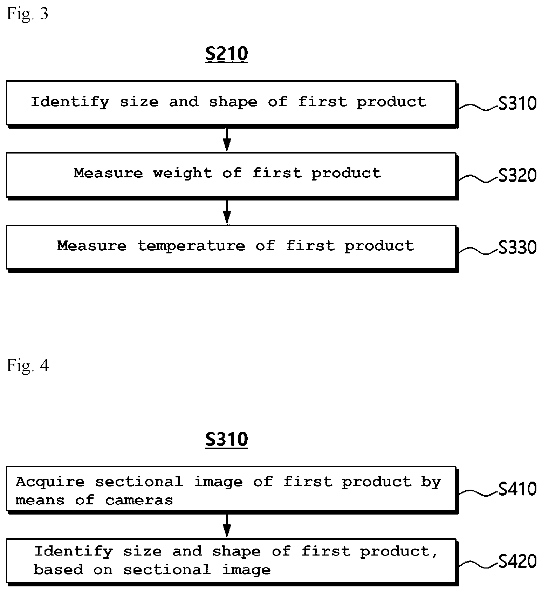

FIG. 3 is a flowchart showing the step of recognizing the first product according to the embodiment of the present invention.

Referring to FIG. 3, the step of recognizing the first product by means of the product recognition unit includes the step of identifying the size and shape of the first product by means of cameras (at step S310).

Further, the step includes the step of measuring the weight of the first product by means of a weight sensor (at step S320).

Furthermore, the step includes the step of measuring the temperature of the first product by means of a thermographic camera (at step S330).

In this case, the temperature of the first product is measured to identify whether the first product is a fresh product or frozen product.

In this case, the trained model may include trained models for a plurality of references for the products sorted according to the sizes, shapes, weights, and temperatures of products.

Further, if a specific product passes through the product recognition unit, training includes supervised training capable of identifying that the specific product is a right product. The training is carried out when a predetermined number of products corresponding to the respective references are introduced into the product recognition unit, and if a product recognition rate is over a predetermined recognition rate, the training is completed, so that the training is not carried out anymore. As a result, an erroneously recognized product is not trained during the product recognition, thereby preventing the recognition error from occurring later.

FIG. 4 is a flowchart showing the step of identifying the size and shape of the first product according to the embodiment of the present invention.

Referring to FIG. 4, the step of identifying the size and shape of the first product according to the embodiment of the present invention includes the step of acquiring the sectional images of the first product by means of the cameras (at step S410).

Next, the step of identifying the size and shape of the first product includes the step of identifying the size and shape of the first product, based on the sectional images of the first product (at step S420).

According to the embodiment of the present invention, the respective sectional images of the first product are acquired by means of the cameras located at different directions and angles.

The unmanned store product checkout device calculates the size of the first product in consideration of the angle differences among the cameras and the distances between the cameras and the first product.

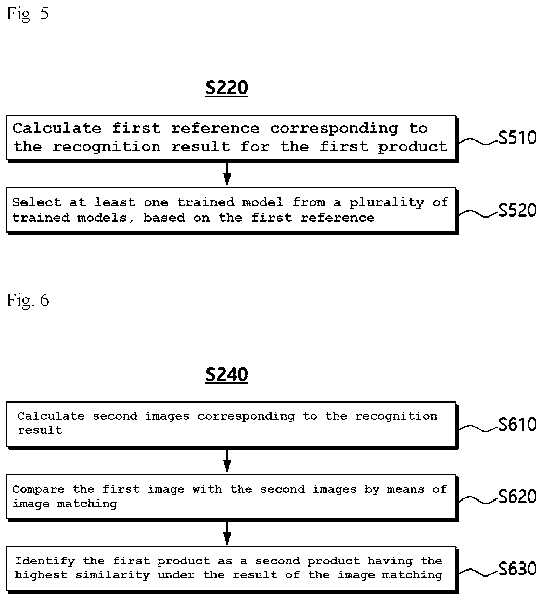

FIG. 5 is a flowchart showing the step of selecting the trained model according to the embodiment of the present invention.

Referring to FIG. 5, the step of selecting the trained model according to the embodiment of the present invention includes the step of calculating a first reference corresponding to the recognition result for the first product (at step S510).

Next, the step of selecting the trained model includes the step of selecting at least one trained model from a plurality of trained models, based on the first reference (at step S520).

In this case, the first reference includes a reference for at least one category, and a trained model corresponding to the category is selected as the trained model.

FIG. 6 is a flowchart showing the step of identifying the first product according to the embodiment of the present invention.

Referring to FIG. 6, the step of identifying the first product according to the embodiment of the present invention includes the step of calculating second images corresponding to the recognition result by means of the at least one trained model (at step S610).

Next, the step of identifying the first product includes the step of comparing the first image with the second images by means of image matching (at step S620).

After that, the step of identifying the first product includes the step of identifying the first product as a second product having the highest similarity under the result of the image matching.

According to the embodiment of the present invention, the second images corresponding to the recognition result are calculated according to trained models. The unmanned store product checkout device compares the first image and the second images by the trained models and calculates degrees of similarity between the first image and the second images according to the trained models.

Next, the first product is determined as the second product having the highest similarity under the result of the image matching by the trained models.

The unmanned store product checkout device does not select one trained model according to the recognition result, but makes use of the plurality of trained models corresponding to the categories according to the recognition result. Further, the unmanned store product checkout device compares the first image with the images calculated through the respective trained models to determine the first product as the product having the highest similarity. As a result, a degree of accuracy in recognizing a product is enhanced through the reduction of erroneous recognition of the product.

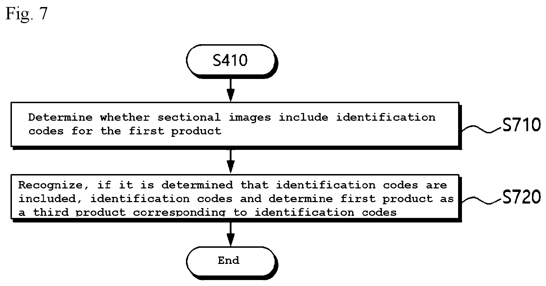

FIG. 7 is a flowchart showing the steps after the step of acquiring the sectional images of the first product according to the embodiment of the present invention.

Referring to FIG. 7, after the step of acquiring the sectional images of the first product, the method for product checkout at an unmanned store according to the embodiment of the present invention includes the step of determining whether the sectional images include identification codes for the first product (at step S710).

In this case, the identification codes are located on the outer wrapped surface of the product and include the identification information for the product. For example, the identification codes include barcodes of a product or QR codes located on the outer wrapped surface of a product.

Next, the method for product checkout at an unmanned store includes the step of recognizing, if it is determined that the identification codes are included, the identification codes and determining the first product as a third product corresponding to the identification codes (at step S720).

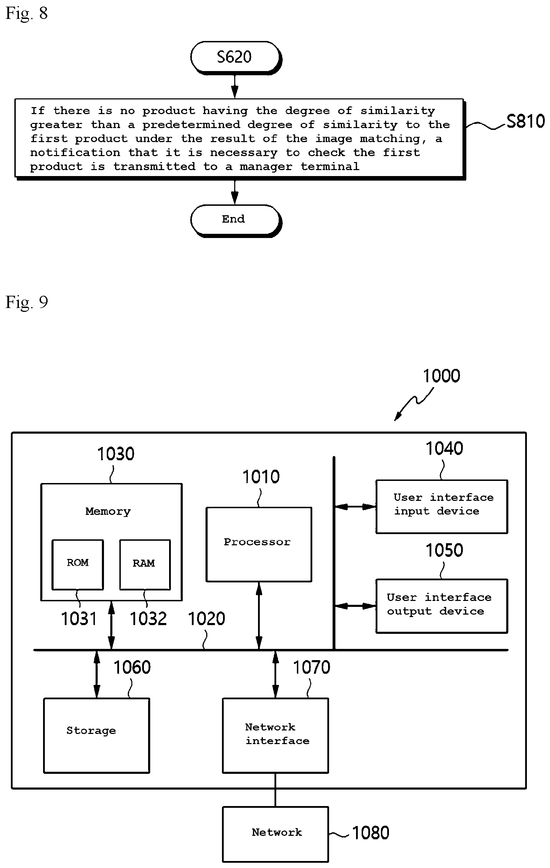

FIG. 8 is a flowchart showing the step after the step of comparing the first image with the second images according to the embodiment of the present invention.

Referring to FIG. 8, after the step of comparing the first image with the second images by means of the image matching, the method for product checkout at an unmanned store according to the embodiment of the present invention further includes the step of transmitting, if there is no product having the degree of similarity greater than a predetermined degree of similarity to the first product under the result of the image matching, a notification that it is necessary to check the first product to a manager terminal (at step S810).

FIG. 9 is a block diagram showing a computer system according to an embodiment of the present invention.

The unmanned store product checkout device according to the embodiment of the present invention operates in a computer system 1000 such as a computer-readable recording medium.

Referring to FIG. 9, the computer system 1000 includes a processor 1010, a memory 1030, a user interface input device 1040, a user interface output device 1050, and a storage 1060 that communicate with one another through a bus 1030. Further, the computer system 1000 includes a network interface 1070 connected to a network 1080. The processor 1010 is a central processing unit or a semiconductor device for executing processing instructions stored in the memory 1030 or the storage 1060. The memory 1030 and the storage 1060 are various types of volatile or non-volatile storage media. For example, the memory includes a ROM 1031 or RAM 1032.

The specific operations as explained in the present invention are just exemplary, and therefore, they do not limit the scope of the present invention. For the brevity of the description, conventional electronic components, control systems, software, and other functional aspects of the systems are not described herein. Further, the lines or members for connecting the components as shown in the drawings are exemplarily suggested for functional connection and/or physical or circuit connection, and in a real device, replaceable or additional various function connection, physical connection, or circuit connection may be provided. Further, if there is no specific mention such as "essentially", "importantly", and the like, the component may not be absolutely necessary in implementing the embodiment of the present invention.

Although specific embodiments have been described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

### Industrial Applicability

The method and device for product checkout at an unmanned store according to the embodiments of the present invention can identify the product by means of artificial intelligence trained models for identifying the product recognized by the product recognition unit and the image of the product and enhance a degree of accuracy in recognizing the product by means of the trained models.

## Claims

1. A method for product checkout at an unmanned store, comprising the steps of:
recognizing, by means of a product recognition unit, a first product put on a checkout counter;
selecting, based on the recognition result for the first product, at least one trained model for identifying the first product;
acquiring a first image of the first product by means of a product identification unit; and
identifying the first product, based on the at least one trained model and the first image.

2. The method according to claim 1, wherein the step of recognizing the first product comprises the steps of:
identifying the size and shape of the first product by means of cameras;
measuring the weight of the first product by means of a weight sensor; and
measuring the temperature of the first product by means of a thermographic camera.

3. The method according to claim 2, wherein the step of identifying the size and shape of the first product comprises the steps of:
acquiring the sectional images of the first product by means of the cameras; and
identifying the size and shape of the first product, based on the sectional images of the first product.

4. The method according to claim 3, wherein the step of selecting the at least one trained model comprises the steps of:
calculating a first reference corresponding to the recognition result for the first product; and
selecting the at least one trained model from a plurality of trained models, based on the first reference.

5. The method according to claim 4, wherein the step of identifying the first product comprises the steps of:
calculating second images corresponding to the recognition result by means of the at least one trained model;
comparing the first image with the second images by means of image matching; and
identifying the first product as a second product having the highest similarity under the result of the image matching.

6. The method according to claim 3, further comprising the steps of:
determining, after the step of acquiring the sectional images of the first product, whether the sectional images include identification codes for the first product; and
recognizing, if it is determined that the identification codes are included, the identification codes and determining the first product as a third product corresponding to the identification codes,
wherein the identification codes are located on the outer wrapped surface of a product and include identification information for the product.

7. The method according to claim 5, further comprising the step of transmitting, after the step of comparing the first image with the second images by means of the image matching, a notification that it is necessary to check the first product to a manager terminal if there is no product having the degree of similarity greater than a predetermined degree of similarity to the first product under the result of the image matching.

8. The method according to claim 2, wherein the trained model comprises trained models for a plurality of references for the products sorted according to the sizes, shapes, weights, and temperatures of products, and if a specific product passes through the product recognition unit, training comprises supervised training capable of identifying that the specific product is a right product.

9. A device for product checkout at an unmanned store, comprising:
a memory in which at least one program is recorded; and
a processor for executing the program,
the program comprising commands for executing the steps of:
recognizing, by means of a product recognition unit, a first product put on a checkout counter;
selecting, based on the recognition result for the first product, at least one trained model for identifying the first product;
acquiring a first image of the first product by means of a product identification unit; and
identifying the first product, based on the at least one trained model and the first image.

10. A system for product checkout at an unmanned store, comprising:
a product recognition unit for identifying the size and shape of a product by means of cameras, measuring the weight of the product by means of a weight sensor, and measuring the temperature of the product by means of a thermographic camera;
a product identification unit for acquiring the image of the product; and
an unmanned store product checkout device for receiving the recognition result for the product from the product recognition unit, receiving the image of the product from the product identification unit, and identifying the product.
